Europäisches Patentamt

European Patent Office

Office européen des brevets

(11) Veröffentlichungsnummer: **0 398 166 B1**

(12) **EUROPÄISCHE PATENTSCHRIFT**

(45) Veröffentlichungstag der Patentschrift: **22.02.95**

(21) Anmeldenummer: **90108859.1**

(22) Anmeldetag: **11.05.90**

(51) Int. Cl.⁶: **C08F 10/02**, C08F 4/655

(54) **Verfahren zur Herstellung von Ethylen (co-) polymeren.**

(30) Priorität: **17.05.89 DE 3916029**

(43) Veröffentlichungstag der Anmeldung:
**22.11.90 Patentblatt 90/47**

(45) Bekanntmachung des Hinweises auf die
Patenterteilung:
**22.02.95 Patentblatt 95/08**

(84) Benannte Vertragsstaaten:
**BE DE ES FR GB IT NL**

(56) Entgegenhaltungen:
**EP-A- 0 136 623**
**EP-A- 0 223 011**
**EP-A- 0 302 242**

(73) Patentinhaber: **HOECHST AKTIENGESELL-
SCHAFT**

**D-65926 Frankfurt (DE)**

(72) Erfinder: **Lüker, Hartmut, Dr.
Triftweg 20
D-5020 Frechen (DE)**
Erfinder: **Franke, Rainer, Dr.
Ginsterweg 18a
D-6272 Niedernhausen/Taunus (DE)**

**Beschreibung**

Die Erfindung bezieht sich auf ein Verfahren zur (Co-)polymerisation von Ethylen zu grobkörnigen Polymerpartikeln mit enger Korngrößenverteilung und hoher Schüttdichte durch Einsatz von Katalysatorteilchen, deren Trägerkomponente mechanisch vorbehandelt wurde.

Verfahren, die eine mechanische Konditionierung der Ausgangsprodukte für Ziegler - Natta - Katalysatoren vorsehen, sind bekannt.

So ist bekannt, $MgCl_2$ oder $Mg(OC_2H_5)_2$ mit $TiCl_4$ in einer Kugelmühle zu mahlen (vgl. DE 26 00 593). Der erhaltene Feststoff wird als Katalysator für die Ethylenpolymerisation eingesetzt und erzeugt ein Polyethylen mit erhöhter Schüttdichte und verbesserter Izod-Schlagzähigkeit.

Bekannt ist die Katalysatorherstellung aus $MgCl_2$ und magnesiumorganischen Substanzen sowie Silizium- und Titanverbindungen (vgl. EP 148 614). Das Polymerisationsprodukt besitzt eine hohe Schüttdichte und einen großen mittleren Partikeldurchmesser. Wie den Beispielen entnommen werden kann, ist häufig die Verwendung umweltbelastender Chemikalien, beispielsweise Tetrahydrofuran, notwendig. Beide genannten Verfahren zur Herstellung von Polymerisationskatalysatoren sind daher mehrstufig und aufwendig.

Bekannt ist weiterhin die Verwendung von vorgemahlenem Magnesiumalkoholat (vgl. EP 223 011).

Schließlich ist ein zweistufiges Verfahren Zur Herstellung eines Polyolefins mit einer breiten Molmassenverteilung bekannt, bei welchem für die Herstellung des verwendeten Trägerkatalysators ein handelsübliches Magensiumalkoholat mit einem großen mittleren Korngrößendurchmesser eingesetzt wird (vgl. EP 30 22 42). Der Katalysator liefert allerdings ein Polymer mit einem kleinen mittleren Korndurchmesser und hohem Feinanteil < 100 $\mu$m.

Die Reaktion des Magnesiumalkoholats mit der Titankomponente führt zu einem Rohprodukt, das durch mehrere Waschoperationen mit organischen Lösemitteln gereinigt werden muß. Die mittels dieses Katalysators gewonnenen Ethylen(co-)polymeren weisen eine breite Molmassenverteilung auf. Über Polymerteilchengröße und Schüttdichte dieser Polymeren ist nichts bekannt.

Die Aufgabe bestand darin, ein einfaches Verfahren zur Katalysatorherstellung zu finden, das es ermöglicht, Katalysatoren herzustellen, die ein Polymer mit großem mittleren und einheitlichen Partikeldurchmesser und mit hoher Schüttdichte erzeugen.

Es wurde nun gefunden, daß diese Aufgabe gelöst werden kann, wenn man eine Ausgangsverbindung für den Katalysator in geeigneter Weise vorbehandelt.

Die Erfindung betrifft somit ein Verfahren zur Herstellung eines Ethylenpolymers mit einheitlicher grober Partikelform und hoher Schüttdichte durch Polymerisation von Ethylen oder von Ethylen mit bis zu 10 Gew.-%, bezogen auf die Gesamtmenge der Monomeren, eines 1-Olefins der Formel $R^6$-$CH = CH_2$, worin $R^6$ einen geradkettigen oder verzweigten Alkylrest mit 1 bis 12 C-Atomen bedeutet, in Suspension, in Lösung oder in der Gasphase, bei einer Temperatur von 20 bis 120°C und einem Druck von 2 bis 60 bar, in Gegenwart eines Katalysators bestehend aus dem Reaktionsprodukt eines Magnesiumalkoholats mit einer vierwertigen Titanverbindung und einer aluminiumorganischen Verbindung, dadurch gekennzeichnet, daß die Polymerisation durchgeführt wird in Gegenwart eines Katalysators, welcher aus

a) dem Gesamtprodukt aus der Reaktion

a1) eines Magnesiumalkoholats der Formel I

$$Mg(OR^1)(OR^2) \quad (I),$$

worin $R^1$ und $R^2$ gleich oder verschieden sind und einem $C_1$-$C_6$-Alkylrest bedeuten, dessen Teilchen durch mechanische Zerkleinerung auf eine mittlere Korngröße von 60 bis 125 $\mu$m gebracht worden sind, mit

a2) einer vierwertigen Titanverbindung der Formel II

$$TiX_m(OR^3)_{4-m} \quad (II)$$

worin $R^3$ einem $C_1$-$C_6$-Alkylrest und X ein Halogenatom bedeutet und m eine ganze Zahl von null bis 4 ist, und

a3) einer aluminiumorganischen Verbindung der Formel III

$$AlR_n^4(OR^5)_pX_{3-n-p} \quad (III),$$

worin $R^4$ und $R^5$ gleich oder verschieden sind und einen $C_1$-$C_{12}$-Alkylrest, X ein Halogenatom, n eine Zahl von null bis 2 und p eine Zahl von null bis 1 bedeuten, im Verhältnis Mg:Ti:Al wie 1 zu 0,05 bis 2 zu 0,3 bis 5, und

b) einem Aluminiumtrialkyl mit 1 bis 12 C-Atomen in den Alkylresten oder dem Umsetzungsprodukt eines Aluminiumtrialkyls oder Aluminiumdialkylhydrids mit Isopren besteht.

Zur Herstellung der erfindungsgemäß einzusetzenden Mischkatalysatorkomponente a wird ein Magnesiumalkoholat der Formel I

$$Mg(OR^1)(OR^2) \quad (I)$$

verwendet. In dieser Formel sind $R^1$ und $R^2$ gleich oder verschieden und bedeuten einen Alkylrest mit 1 bis 6, vorzugsweise 2 bis 4 Kohlenstoffatomen.

Beispiele sind $Mg(OCH_3)_2$, $Mg(OC_2H_5)_2$, Mg-$(O-i-C_3H_7)_2$, $Mg(O-n-C_3H_7)_2$, $Mg(O-n-C_4H_9)_2$, Mg-$(OCH_3)(OC_2H_5)$, $Mg(OC_2H_5)(O-n-C_3H_7)$. Bevorzugt verwendet werden die einfachen Magnesiumalkoholate wie Magnesiumdiethylat, Magnesiumdi-n-propylat und Magnesium-diisobutylat.

Die Magnesiumverbindung wird in einer mechanisch zerkleinerten Form eingesetzt. Die Zerkleinerung des grobkörnigen Ursprungsmaterials geschieht bevorzugt durch Mahlen, besonders vorteilhaft durch Mahlen in einer Kugelmühle, bis das Produkt eine mittlere Korngröße von 60 bis 125 $\mu$m hat, wobei das Mahlen etwa 10 bis 30, bevorzugt 20 bis 25 Stunden, bei einer Temperatur von -20 bis 120, bevorzugt 20 bis 25 °C, durchgeführt wird.

Das so erhaltene Produkt kann bei Bedarf durch übliche Maßnahmen, wie zum Beispiel durch Sieben, jeweils in Fraktionen noch engerer Korngrößenverteilung aufgeteilt werden.

Danach wird das gemahlene Magnesiumalkoholat in einem inerten Dispergiermittel mit einer vierwertigen Titanverbindung der Formel II

$$TiX_m(OR^3)_{4-m} \qquad (II),$$

worin $R^3$ einen Alkylrest mit 1 bis 6, vorzugsweise 1 bis 3 C-Atomen, und X ein Halogenatom, vorzugsweise Chlor, bedeuten, und m null bis 4, vorzugsweise 2 bis 4 ist, umgesetzt.

Beispielweise seien genannt:
$Ti(OC_2H_5)Cl_3$, $Ti(OC_2H_5)_2Cl_2$, $Ti(OC_2H_5)_3Cl$, $Ti(O-i-C_3H_7)_3Cl$, $Ti(O-i-C_3H_7)_2Cl_2$, $Ti(O-n-C_4H_9)_3Cl$, $Ti(O-n-C_4H_9)_2Cl_2$, $Ti(O-i-C_4H_9)_3Cl$, $Ti(O-i-C_4H_9)_2Cl_2$, $Ti(O-n-C_4H_9)_4$, $Ti(o-n-C_3H_7)_4$. Vorzugsweise werden $TiCl_4$ und $Ti(O-n-C_4H_9)_2Cl_2$ verwendet.

Die Umsetzung des Magnesiumalkoholats mit der Titanverbindung erfolgt bei einer Temperatur von 0 bis 150, vorzugsweise bei 50 bis 120 °C. Die Titanverbindung wird innerhalb von 0,5 bis 20, vorzugsweise von 3 bis 10 Stunden mit dem Magnesiumalkoholat zusammengebracht - vorzugsweise durch Zugabe einer Lösung der Titanverbindung zu einer Suspension des Magnesiumalkoholats.

Der entstandene Feststoff wird sodann ohne Abtrennung der Nebenprodukte und des Dispergiermittels umgesetzt mit einer halogenhaltigen aluminiumorganischen Verbindung der Formel III

$$AlR^4_n(OR^5)_pX_{3-n-p} \qquad (III),$$

worin $R^4$ und $R^5$ gleich oder verschieden sind und einen Alkylrest mit 1 bis 12, vorzugsweise mit 1 bis 4 Kohlenstoffatomen bedeuten, X ein Halogenatom, vorzugsweise Chlor, ist und n eine Zahl größer null und kleiner 2, vorzugsweise 1 bis 2, und p eine Zahl größer null und kleiner 1, vorzugsweise gleich 0,5 bedeutet.

Geeignete aluminiumorganische Verbindungen sind
$Al(C_2H_5)_2Cl$, $Al(C_2H_5)Cl_2$, $Al(n-C_3H_7)_2Cl$, $Al(n-C_3H_7)Cl_2$, $Al(n-C_4H_9)Cl_2$, $Al(i-C_4H_9)_2Cl$, $Al(i-C_4H_9)-Cl_2$, $Al(n-C_4H_9)(OC_2H_5)Cl$
sowie äquimolare Mischungen der Mono- und Dihalogenide, die sogenannten Aluminiumalkylsesquichloride, oder Mischungen von Mono- und Dihalogeniden verschiedener Zusammensetzung. Vorzugsweise werden aus dieser Gruppe $Al(C_2H_5)Cl_2$ und $Al_2(C_2H_5)_3Cl_3$ verwendet.

Die Umsetzung erfolgt bei einer Temperatur von 0 bis 150, vorzugsweise von 50 bis 120 °C, wobei die Reaktionspartner innerhalb von 0,5 bis 20, vorzugsweise 2 bis 8 Stunden zusammengebracht werden.

Als inerte Dispergiermittel für die vorgenannten Umsetzungen eignen sich aliphatische und cycloaliphatische Kohlenwasserstoffe wie Butan, Pentan, Hexan, Heptan, Cyclohexan, Isooctan, sowie aromatische Kohlenwasserstoffe wie Benzol und Xylol. Auch Benzin und hydrierte Dieselölfraktionen, die sorgfältig von Sauerstoff, Schwefelverbindungen und Feuchtigkeit befreit worden sind, können eingesetzt werden.

Magnesiumalkoholat, vierwertige Titanverbindung und aluminiumorganische Verbindung werden im Verhältnis Mg:Ti:Al wie 1 zu 0,05 bis 2 zu 0,3 bis 5, vorzugsweise 1 zu 0,2 bis 1 zu 0,4 bis 1.5 eingesetzt.

Die so hergestellte Suspension der Katalysatorkomponente a wird ohne Abtrennung des Dispergiermittels und der Nebenprodukte direkt zur Polymerisation verwendet.

Als Katalysatorkomponente b wird ein Aluminiumtrialkyl mit 1 bis 12 C-Atomen in den Alkylresten, wie z.B. Triethylaluminium, Triisobutylaluminium, Triisooctylaluminium oder das als Aluminiumsoprenyl bekannte Umsetzungsprodukt eines Aluminiumtrialkyls oder -dialkylhydrids mit Isopren verwendet.
Bevorzugt ist Triethylaluminium.

Die Polymerisation wird ein- oder zweistufig, vorzugsweise als Suspensionspolymerisation, in einem inerten Dispergiermittel durchgeführt. Als Dispergiermittel sind die gleichen organischen Lösemittel geeignet, wie sie zur Herstellung der Katalysatorkomponente a beschrieben wurden. Die Polymerisation in der Gasphase ist jedoch auch möglich.

Die Polymerisationstemperatur beträgt 20 bis 120, bevorzugt 70 bis 90 °C; der Druck liegt im Bereich von 2 bis 60, vorzugsweise 4 bis 20 bar.

Für den Fall, daß die Reaktion zweistufig durchgeführt wird, liegt das Mengenverhältnis der in den Stufen 1 und 2 jeweils gebildeten Polyolefine im Bereich von 30 zu 70 bis 70 zu 30, wobei das in der Stufe 1 gebildete Polymer kontinuierlich in die Stufe 2 überführt wird. Das endgültige Polymergemisch wird kontinuierlich aus Stufe 2 abgezogen.

Mit dem erfindungsgemäß verwendeten Katalysatorsystem wird Ethylen oder Ethylen mit bis zu 10 Gew.-%, bezogen auf die Gesamtmonomermenge, eines 1-Olefins der Formel $R^6$-CH = $CH_2$, worin $R^6$ einen geradkettigen oder verzweigten Alkylrest mit 1 bis 12, vorzugsweise 1 bis 10 C-Atomen, bedeutet, polymerisiert. Beispiele sind Propylen, 1 Buten, 1-Penten, 1-Hexen, 1-Octen, 4-Methylpenten-1. Vorzugsweise werden Propylen, Buten und Hexen eingesetzt.
Dabei wird das Comonomere vorzugsweise in der ersten Stufe, in welcher ein Polymerisat mit der höheren Molmasse entsteht, eingeführt.

Das Gesamtpolymerisat aus der zweiten Stufe wird in bekannter Weise vom Dispergiermittel abgetrennt und getrocknet.

Ein Vorteil des erfindungsgemäßen Verfahrens ist die sehr einfache Herstellung der Übergangsmetallkomponente des Katalysators. Diese wird durch einfaches Zusammenbringen der Einzelkomponenten unter den entsprechenden Reaktionsbedingungen erhalten.
Eine Wäsche mit einem inerten Kohlenwasserstoff entfällt in der Regel.
Dadurch entsteht auch keine Waschlauge, die in weiteren Prozeßschritten erst wieder zersetzt und unter Anfall von Abwasser aufgearbeitet werden muß.

Weiterhin treten auch bei längerem kontinuierlichen Betrieb keine Polymerablagerungen an den Kesselwänden und in den Verbindungsleitungen auf und der Gehalt des Produktes an Teilchen mit einer Korngröße unter 100 $\mu$m ist bedeutend geringer.

Der große Vorteil des erfindungsgemäßen Verfahrens besteht jedoch darin, daß das speziell modifizierte Magnesiumalkoholat einen Katalysator herzustellen erlaubt, der ein Ethylenpolymer mit einem sehr großen mittleren Korndurchmesser von 250 bis 300 $\mu$m und einer hohen Schüttdichte von 400 bis 500 g/$dm^3$ erzeugt.

Die Korngrößenverteilung ist in hohem Maße einheitlich.

Ein weiterer Vorteil entsteht, wenn das gemahlene Magnesiumalkoholat einer zusätzlichen Klassierung unterworfen wird. Die Hauptfraktionen (in $\mu$m): kleiner 63 (I), 63 bis 100 (II), 100 bis 125 (III) und größer 125 (IV) liefern ebenfalls Katalysatoren, die jeder für sich sehr großteiliges, grießartiges Produkt erzeugen, wobei das erhaltene Polymerpulver noch einheitlicher in der Korngröße ist.

Weiterhin ist die Regelung der Molmasse der Polyolefine durch Wasserstoff wesentlich effizienter als bei herkömmlichen Verfahren durchführbar.

Die nachfolgenden Beispiele sollen die Erfindung erläutern.
Es bedeuten:

| | |
|---|---|
| $KZA_{red}$ | : Reduzierte Katalysator-Zeit-Aktivität |
| MFI 190/5 | : Schmelzindex nach DIN 53735, gemessen bei 190°C bei einer Belastung von 5 kg |
| MFI 190/15 | : gemessen bei 190°C bei einer |
| MFI 190/21,6 | : Belastung von 15 bzw. 21,6 kg |
| $d_{50}$ | : mittlere Teilchengröße, erhalten durch Siebfraktionierung |
| SD | : Schüttdichte, gemessen nach DIN 53468 |

**Beispiel 1** Herstellung des Katalysators

a) In einer Kugelmühle mit einem Volumen von 25 $dm^3$, die mit 500 Kugeln vom Durchmesser 19,05 mm geladen war, wurden jeweils 10 bis 20 $dm^3$ ( = ca. 10,4 bis 20,8 kg) Mg($OC_2H_5$)$_2$ während bei 10 bis 30 Stunden -20 bis 120°C gemahlen.

Das anfallende feinteilige Material konnte bei Bedarf einer Siebauftrennung in einzelne Korngrößenfraktionen unterzogen werden.

b) In einem 2 $dm^3$ Rührgefäß wurden 500 mmol Mg-Ethylat (57 g, Korngröße 63 bis 100 $\mu$m) unter Ausschluß von Luft und Feuchtigkeit in 500 $cm^3$ einer hydrierten Dieselölfraktion vorgelegt. Unter Rühren und Argonüberlagerung wurden bei einer Temperatur von 100°C innerhalb von 2 h 500 $cm^3$ einer 0,2-molaren Lösung von $TiCl_4$ zu der Dieselölfraktion zugegeben. Anschließend wurden 500 mmol $AlCl_2(C_2H_5)$ in 1000 $cm^3$ Dieselöl innerhalb von 2 Stunden zugetropft. Danach wurde der Ansatz weitere 2 Stunden gerührt. Der Reaktionsansatz färbte sich bräunlich und enthielt 0,065 mol $Ti^{3+}$/$dm^3$.
Ein Teil dieser Suspension wurde mit der Dieselölfraktion auf eine Ti-Konzentration von 0,01 mmol/$dm^3$ verdünnt.

**Beispiel 2** Ethylenpolymerisation

In einen 2 $dm^3$ Druckreaktor wurden 0,02 mmol Katalysator gemäß Beispiel 1 in 1500 $cm^3$ Dieselöl mit 3 mmol Triethylaluminium vorgelegt. Nach Aufdrücken von 3,15 bar $H_2$ und 3,85 bar Ethylen wurde bei 85°C 2 Stunden lang polymerisiert.
Ergebnis
Ausbeute: 140 g
$KZA_{red}$: 909 g/mmol Ti•h•bar
MFI 190/5: 30 g/10 min
MFI 190/15: 151 g/10 min
$d_{50}$: 240 $\mu$m
Anteil <100 $\mu$m: 1 %

SD: 0,33 kg/dm$^3$

**Beispiel 3**

Es wurde wie in Beispiel 2 verfahren, bei der Katalysatorherstellung wurde jedoch ein Mg-Ethylat der Kornklasse von 100-125 $\mu$m verwendet. Dieser Katalysator wurde zur Polymerisation verwendet.
Ergebnis der Polymerisation:
Ausbeute: 170 g
KZA$_{red.}$: 1120 g/mmol Ti•h•bar
MFI 190/5: 34 g/10 min
MFI 190/15: 167 g/10 min
d$_{50}$: 236 min
Anteil <100 $\mu$m: 1 %
SD: 0,34 kg/dm$^3$

**Beispiel 4**

Zur Katalysatorherstellung wurde ein ungesiebtes, gemahlenes Mg-Ethylat mit einem mittleren Korndurchmesser von 60 $\mu$m verwendet.
Mit dem so hergestellten Katalysator wurde eine Polymerisation gemäß Beispiel 2 durchgeführt.
Ergebnis der Polymerisation:
Ausbeute:
KZA$_{red.}$: 1025 g/mmol Ti•h•bar
MFI 190/5: 31,1 g/10 min
MFI 190/15: 147 g/10 min
d$_{50}$: 210 $\mu$m
Anteil <100 $\mu$m: 2 %
SD: 0,345 kg/dm$^3$

**Vergleichsbeispiel A**

Es wurde zunächst wie in Beispiel 1b gearbeitet, dabei wurde ein ungemahlenes Mg-Ethylat mit einem d$_{50}$ von 540 $\mu$m eingesetzt.
Danach wurde wie in Beispiel 2 verfahren.
Ergebnis der Polymerisation:
Ausbeute: 162 g
KZA$_{red.}$: 1056 g/mmol Ti•h•bar
MFI 190/5: 17 g/10 min
MFI 190/21,6 : 166 g/10 min
d$_{50}$: 142 $\mu$m
Anteil <100 $\mu$m: 10 %
SD: 0,33 kg/dm$^3$

**Beispiel 5**

In einem 2 dm$^3$ Rührgefäß wurden 1000 mmol Mg-Ethylat (114 g) mit einer Korngrößenklasse von 63 bis 100 $\mu$m unter Ausschluß von Luft und Feuchtigkeit in 500 cm$^3$ einer hydrierten Dieselölfraktion vorgelegt. Unter Rühren und Argonüberlagerung wurden bei einer Temperatur von 100 °C innerhalb von 5 Stunden 2,2 mol TiCl$_4$ in 1000 cm$^3$

Dieselöl zugegeben.
Nach der Zugabe wurde das weiße Umsetzungsprodukt 12 h bei 100 °C gehalten. Die Zusammensetzung der so erhaltenen Katalysatorkomponente war
Mg:Ti:Cl = 1:0,11:2,05.
Diese Katalysatorkomponente wurde unter den Bedingungen von Beispiel 2 zur Polymerisation eingesetzt, die Einsatzmenge Katalysator betrug aber 0,015 mmol, bezogen auf Titan, und als Aktivator wurde 3,5 mmol Triisobutylaluminum verwendet. Das Ergebnis der Polymersation war:
Ausbeute: 134 g
KZA$_{red.}$: 1163 g/mmol Ti•h•bar
MFI 190/5: 3,65 g/10 min
MFI 190/21,6: 41,4 g/10 min
d$_{50}$: 233 $\mu$m
Anteil <100 $\mu$m: 1 %
SD: 0.31 kg/dm$^3$

**Beispiel 6**

Es wurde wie in Beispiel 5 gearbeitet, zur Katalysatorherstellung wurde Mg-Ethylat der Kornklasse 100-125 $\mu$m eingesetzt.
Polymerisation von Ethylen:
Ausbeute: 91 g
KZA$_{red.}$: 790 g/mmol Ti•h•bar
MFI 190/5: 2,77 g/10 min
MFI 190/15: 17,2 g/10 min
d$_{50}$: 232 $\mu$m
Anteil <100 $\mu$m: 1 %
SD: 0,3 kg/dm$^3$

**Beispiel 7**

Es wurde wie in Beispiel 5 gearbeitet, zur Katalysatorherstellung wurde gemahlenes ungesiebtes Mg-Ethylat mit einer mittleren Korngröße von 60 $\mu$m eingesetzt.
Das Ergebnis der Polymerisation war:
Ergebnis: 143 g
KZA$_{red.}$: 1241 g/mmol Ti•h•bar
MFI 190/5: 3,8 g/10 min
MFI 190/21,6: 44,4 g/10 min
d$_{50}$: 248 $\mu$m
Anteil <100 $\mu$m: 1 %
SD: 0,32 kg/dm$^3$

**Patentansprüche**

1. Verfahren zur Herstellung eines Ethylenpolymers mit einheitlicher grober Partikelform und hoher Schüttdichte durch Polymerisation von Ethylen oder von Ethylen mit bis zu 10 Gew.-%, bezogen auf die Gesamtmenge der Monomeren, eines 1-Olefins der Formel R$^6$-CH = CH$_2$, worin R$^6$ einen geradkettigen oder

verzweigten Alkylrest mit 1 bis 12 C-Atomen bedeutet, in Suspension, in Lösung oder in der Gasphase, bei einer Temperatur von 20 bis 120°C und einem Druck von 2 bis 60 bar, in Gegenwart eines Katalysators bestehend aus dem Reaktionsprodukt eines Magnesiumalkoholats mit einer vierwertigen Titanverbindung und einer aluminiumorganischen Verbindung, dadurch gekennzeichnet, daß die Polymerisation durchgeführt wird in Gegenwart eines Katalysators, welcher aus

    a) dem Gesamtprodukt aus der Reaktion

        a1) eines Magnesiumalkoholats der Formel I

$$Mg(OR^1)(OR^2) \quad (I),$$

worin $R^1$ und $R^2$ gleich oder verschieden sind und einem $C_1$-$C_6$-Alkylrest bedeuten, dessen Teilchen durch mechanische Zerkleinerung auf eine mittlere Korngröße von 60 bis 125 $\mu$m gebracht worden sind, mit

        a2) einer vierwertigen Titanverbindung der Formel II

$$TiX_m(OR^3)_{4-m} \quad (II)$$

worin $R^3$ einem $C_1$-$C_6$-Alkylrest und X eine Halogenatom bedeutet und m eine ganze Zahl von null bis 4 ist, und

        a3) einer aluminiumorganischen Verbindung der Formel III

$$AlR^4_n (OR^5)_p X_{3-n-p} \quad (III),$$

worin $R^4$ und $R^5$ gleich oder verschieden sind und einen $C_1$-$C_{12}$-Alkylrest, X ein Halogenatom, n eine Zahl von null bis 2 und p eine Zahl von null bis 1 bedeuten, im Verhältnis Mg:Ti:Al wie 1 zu 0,05 bis 2 zu 0,3 bis 5, und

    b) einem Aluminiumtrialkyl mit 1 bis 12 C-Atomen in den Alkylresten oder dem Umsetzungsprodukt eines Aluminiumtrialkyls oder Aluminiumdialkylhydrids mit Isopren besteht.

2. Verfahren nach Anspruch 1, dadurch gekennzeichnet, daß ein in einer Kugelmühle gemahlenes Magnesiumalkoholat eingesetzt wird.

**Claims**

1. Process for the preparation of an ethylene polymer with uniform, coarse particle size and high apparent density by polymerization of ethylene or of ethylene with up to 10% (w/w), based on the total amount of monomer, of a 1-olefin of the formula $R^6$-CH = CH$_2$, in which $R^6$ is a straight-chain or branched alkyl radical with 1 to 12 C atoms, in suspension, in solution or in the gas phase, at a temperature of 20 to 120°C and a pressure of 2 to 60 bar, in the presence of a catalyst consisting of the reaction product of a magnesium alcoholate with a tetravalent titanium compound and an organoaluminium compound, characterized by the fact that the polymerization is carried out in the presence of a catalyst which consists of

    a) the total product of the reaction of

        a1) a magnesium alcoholate of the formula I

$$Mg(OR^1)(OR^2) \quad (I)$$

in which $R^1$ and $R^2$ are identical or different and are a $C_1$-$C_6$ alkyl radical, whose particles have been mechanically comminuted to an average particle size of 60 to 125 $\mu$m, with

        a2) a tetravalent titanium compound of the formula II

$$TiX_m(OR^3)_{4-m} \quad (II)$$

in which $R^3$ is a $C_1$-$C_6$ alkyl radical, X a halogen atom and m an integer from zero to 4, and

        a3) an organoaluminium compound of the formula III

$$AlR^4_n (OR^5)_p X_{3-n-p} \quad (III)$$

in which $R^4$ and $R^5$ are identical or different and are a $C_1$-$C_{12}$ alkyl radical, X is a halogen atom, n a number from zero to 2 and p a number from zero to 1, in the ratio Mg:Ti:Al = 1 to 0.05-2 to 0.3-5, and

    b) an aluminium trialkyl with 1 to 12 C atoms in the alkyl radicals or the reaction product of an aluminium trialkyl or dialkylaluminium hydride with isoprene.

2. Process according to claim 1, characterized by the fact that a magnesium alcoholate ground in a ball mill is used.

**Revendications**

1. Procédé pour préparer un polymère de l'éthylène ayant une granulométrie uniforme grossière et une grande masse volumique apparente, par polymérisation de l'éthylène, ou de l'éthylène et d'une quantité allant jusqu'à 10 % en poids, par rapport à la quantité totale des monomères, d'une 1-oléfine de formule $R^6$-$CH = CH_2$, où $R^6$ est un radical alkyle à chaîne droite ou ramifiée ayant de 1 à 12 atomes de carbone, en suspension, en solution ou en phase gazeuse, à une température de 20 à 120°C et sous une pression de 2 à 60 bar, en présence d'un catalyseur constitué du produit de la réaction d'un alcoolate de magnésium avec un composé du titane tétravalent et un composé organique de l'aluminium, caractérisé en ce que la polymérisation est mise en oeuvre en présence d'un catalyseur, qui est constitué

    a) du produit global de la réaction

        a1) d'un alcoolate de magnésium de formule I

$$Mg(OR^1)(OR^2) \quad (I),$$

dans laquelle $R^1$ et $R^2$ sont identiques ou différents et représentent chacun un radical alkyle en $C_1$-$C_6$, dont les particules ont été portées à une granulométrie moyenne de 60 à 125 $\mu$m par un broyage mécanique, avec

        a2) un composé du titane tétravalent de formule II

$$TiX_m(OR^3)4-m \quad (II),$$

dans laquelle $R^3$ est un radical alkyle en $C_1$-$C_6$, et X est un atome d'halogène, m étant un nombre entier compris entre zéro et 4, et

        a3) un composé organique de l'aluminium de formule III

$$AlR_n^4(OR^5)_pX_{3-n-p} \quad (III),$$

dans laquelle $R^4$ et $R^5$ sont identiques ou différents et représentent chacun un radical alkyle en $C_1$-$C_{12}$, X est un atome d'halogène, n est un nombre compris entre zéro et 2 et p est un nombre compris entre zéro et 1, la proportion Mg:Ti:Al étant de 1:0,05 à 2:0,3 à 5, et

    b) d'un aluminiumtrialkyle ayant de 1 à 12 atomes de carbone dans les radicaux alkyle, ou encore du produit de la réaction d'un aluminiumtrialkyle ou d'un hydrure d'aluminiumdialkyle avec l'isoprène.

2.   Procédé selon la revendication 1, caractérisé en ce qu'on utilise un alcoolate de magnésium broyé dans un broyeur à billes.